# EUROPEAN PATENT SPECIFICATION

(11) **EP 0 946 576 B1**
(45) Date of publication and mention of the grant of the patent: **03.04.2002**
(21) Application number: 97953420.3
(22) Date of filing: 19.12.1997
(51) Int. Cl.: C07F 17/00, C08F 10/00

(54) **PROCATALYSTS AND PROCESS FOR PREPARING SAME**
KATALYSATOR-VORLÄUFERVERBINDUNGEN, UND VERFAHREN ZU DEREN HERSTELLUNG
PROCATALYSEURS ET LEUR PROCEDE DE PREPARATION

(30) Priority: 20.12.1996 US 770410; 20.12.1996 US 770409
(43) Date of publication of application: 06.10.1999
(73) Proprietor: UNION CARBIDE CHEMICALS & PLASTICS TECHNOLOGY CORPORATION, Danbury, Connecticut 06817-0001 (US)
(72) Inventor: HAZIN, Paulette, Nasri, Houston, TX 77083 (US)
(74) Representative: Hayes, Adrian Chetwynd
(86) International application number: US9723805
(87) International publication number: WO9828314

(56) References cited:
- EP-A- 0 426 643
- EP-A- 0 530 908
- EP-A- 0 574 597
- EP-A- 0 729 967

## Description

### FIELD OF THE INVENTION

The present invention relates generally to preparation of metallocene compounds useful in catalyst systems employed in olefin polymerization.

### BACKGROUND OF THE INVENTION

Metallocene olefin polymerization catalysts generally use cyclopentadienyl (Cp), indenyl and fluorenyl groups π-bonded to Group III to VI metals as procatalyst compounds and cocatalysts comprising primarily alumoxanes and boranes. These metallocene catalysts can be used to produce stereospecific polymers from olefins, which is complicated by the structure of these compounds. From the nature of their structure, some compounds of the metallocenes exist as two stereoisomers: a racemic modification and a meso form. The racemic modification includes a pair of enantiomers which is simply a pair of stereoisomers that are nonsuperimposable mirror images. The meso form is a stereoisomer which can be superimposed on its mirror image. Polymerization employing the meso form has traditionally resulted in the production of primarily atactic polymer. See e.g., US-A-5,455,366; US-A-5,329,033; and US-A-5,145,819. See also, Wolfgang A. Herrmann, et al., The First Example of an *Ethylene*-Selective Soluble Ziegler Catalyst of the Zirconocene Class, 28 *Angew. Chem. Int. Ed. Engl.,* 1511 (No. 11, 1989). Production of polymer primarily of the isotactic form has necessitated use of a catalyst consisting almost exclusively of the racemic modification.

Preparation of metallocene procatalyst compounds has traditionally been conducted in polar solvent systems. See, for example, in EP-A-0 351 392 A. However, due to the aggressive nature of these solvent systems, metallocene procatalyst compounds produced in polar solvents are impure, sensitive to air and moisture, and are susceptible to the decomposition of reaction intermediates, particularly the lithiated ligand, which is generally indicated by a dark colored reaction solution. Additionally, procatalyst compound yields are also generally low for processes involving a polar solvent system.

EP-A-0 729 967 and EP-A-0 574 597 disclose methods of preparing metallocene catalysts which are soluble in methylene chloride.

Metallocene procatalyst compounds prepared in a polar solvent suffer another difficulty if their intended use is as a catalyst for the production of substantially isotactic polyolefins because the use of these metallocene procatalyst compounds to make stereospecific polymers has typically dictated an additional step in which the racemic modification is separated from the meso form. See e.g., US-A-5,455,366; US-A-5,329,033; and US-A-,5,145,819. See also, Herrmann, et al., 28 *Angew. Chem. Int. Ed. Engl.,* 1511 (No. 11, 1989). Additionally, separation of the two isomers is inefficient because of the low yield of procatalyst compound, as well as the additional purification step required. Alternatively, processes have been described in which the meso form is defeated by substituting various groups onto the Cp groups. See, e.g., US-A-5,349,032.

To avoid the difficulty associated with the use of polar solvents, a process which employs non-polar solvent has been used, but this process is relatively slow and does not address those specific instances in which it is intended that the metallocene procatalyst compound be used in stereospecific polymerizations. See e.g., US-A-5,117,020.

A more desirable process would allow for the production of metallocene procatalyst compounds at high yields but in relatively short reaction times. Additionally, such a process would allow for the production of metallocene procatalyst compounds that could be used for the stereospecific polymerization but would not entail preparative steps in which various stereoisomers of the procatalyst compound are separated and would not be restricted to procatalyst that, due to substitutions, do not have a meso form as a stereoisomer.

### SUMMARY OF THE INVENTION

In accordance with this invention, there is provided metallocene procatalyst compounds known to be useful in the polymerization of olefins to make stereospecific polymers and a process for preparing same. The present invention discloses a metallocene procatalyst compound that has a solubility, at reflux conditions, in methylene dichloride in an amount less than 0.5 grams per liter, and that is useful in making stereospecific polymers, the metallocene procatalyst compound being obtainable by a process comprising: reacting (a) the reaction product of a reactant comprising at least one cyclopentadienyl, indenyl or fluorenyl ligand group, with an alkyl compound containing an alkali metal; with (b) a transition metal salt in the presence of (c) an accelerant comprising a compound with a heteroatom having at least one lone pair of electrons in the outer valence shell, but not a labile proton, and optionally (d) a solvent, wherein, when a solvent is not used during reaction of (a) and (b), the quantity of accelerant employed is less than 70 percent by weight of the combined mass of the reaction product (a) and the transition metal salt (b), and wherein, if a solvent is used during the reaction of (a) and (b), the quantity of accelerant employed is less than 20 percent by weight of the combined mass of the reaction product (a), the transition metal salt (b) and the solvent.

The transition metal salt and the reaction product are reacted in the presence of an accelerant used in a quantity insufficient to produce a solution.

When this process of the present invention is used to form metallocene procatalyst compounds which exist in both racemic and meso forms, the resultant metallocene procatalyst compounds can be used in the stereospecific polymerization of olefins to make stereospecific polymers without separation of the stereoisomers.

### DETAILED DESCRIPTION OF THE INVENTION

Metallocenes are organometallic coordination complexes of one or more π-bonded moieties in association with a metal atom from groups III to VIII or the rare earth metals of the Periodic Table. Bridged and unbridged mono-, di-, and tri-cycloalkadienyl/metal compounds are the most common metallocene catalysts, and generally are of the formula:

(L)_{y}R¹ _{z}(L')MX_{(x-y-1)} (I)

wherein M is a metal from groups III to VIII or a rare earth metal of the Periodic Table; L and L' are the same or different and are π-bonded ligands coordinated to M, preferably cycloalkadienyl groups such as Cp, indenyl, or fluorenyl groups (optionally substituted with one or more hydrocarbyl groups containing 1 to 20 carbon atoms); R¹ is selected from the group consisting of C₁-C₄ substituted or unsubstituted alkylene radicals, dialkyl or diaryl germanium or silicon groups, and alkyl or aryl phosphine or amine radicals bridging L and L'; each X is independently hydrogen, an aryl, alkyl, alkenyl, alkylaryl, or arylalkyl radical having 1-20 carbon atoms, a hydrocarboxy radical having 1-20 carbon atoms, a halogen, R²CO₂-, or R²₂NCO₂-, wherein each R² is a hydrocarbyl group containing 1 to 20 carbon atoms; y is 0, 1, or 2; x is 1, 2, 3, or 4 depending upon the valence state of M; z is 0 or 1 and is 0 when y is 0; and x-y ≥ 1.

Illustrative, but non-limiting, examples of metallocenes are dialkyl and diaryl metallocenes [e.g., (Cp)₂Ti(CH₃)₂, (Cp)₂Ti(C₆H₅)₂, (Cp)₂Zr(CH₃)₂, (Cp)₂Zr(C₆H₅)₂, (Cp)₂Hf[C₆H₅)₂, (Cp)₂Ti di-neopentyl, (Cp)₂Zr di-neopentyl, (Cp)₂Hf di-neopentyl, (Cp)₂Ti di-benzyl, (Cp)₂Zr di-benzyl,(Cp)₂Hfdi-benzyl]; mono alkyl metallocenes [e.g., (Cp)₂M'(CH₃)J, (Cp)₂M' neopentyl J, (Cp)₂M'C₆H₅J, (where J = F, Cl, Br, or I, preferably Cl, and where M' is Zr, Hf or Ti, preferably Zr)]; trialkyl metallocenes [e.g., CpTi(CH₃)₃, CpTi(C₆H₅)₃, CpTi trineopentyl, CpZr(CH₃)₃, CpZr(C₆H₅)₃, CpZr tri-neopentyl, CpHf(CH₃)₃, CpHf(C₆H₅)₃, CpHf tri-neopentyl]; mono Cp metal tri-halide complexes [e.g.,CpM'J₃, penta-methylCpM'J₃, penta-ethylCpM'J₃]; bis-Cp metal di-halide complexes [e.g., Cp₂M'J₂, penta-methyl Cp₂M'J₂, pentaethylCp₂M'X₂, bis(1,3 dimethyl-Cp)M'J₂]; dialkyl indenyl metallocenes [e.g., (indenyl)₂M'(CH₃)₂, (indenyl)₂M'(C₆H₅)₂, (indenyl)₂M' dineopentyl, (indenyl)₂M' di-benzyl]; mono alkyl indenyl metallocenes, [e.g., (indenyl)₂M'(CH₃)J, (indenyl)₂M' neopentyl J, (indenyl)₂M'C₆H₅J], trialkyl or triaryl indenyl metallocenes [e.g., (indenyl)M'(CH₃)₃, (indenyl)M'(C₆H₅)₃, (indenyl)M' tri-neopentyl]; mono-indenyl metal tri-halide complexes [e.g., (indenyl)M'J₃, hepta-methylindenyl M'J₃, heptaethylindenylM'J₃; bis-indenyl metal di-halide complexes [e.g., indenyl₂M'J₂, hepta-methylindenyl₂M'J₂, hepta-ethylindenyl₂M'J₂, bis(1,3 dimethyl-indenyl)M'X₂]; bisfluorenyl structures [e.g., bisfluorenylM'J₂, bis-nona methyl fluorenylM'J₂, bis-1-methyl fluorenylM'J₂]; the carbene represented by the formula bis(Cp)Ti=CH₂ and derivatives of this reagent; silicon, phosphine, amine or carbon bridged Cp complexes [e.g., (CH₃)₂silyldiCp Ti(C₆H₅)₂ or Cl₂ CH Cl₂ phosphine diCp Ti (C₆H₅)₂ or Cl₂]; methylene diCpTiCl2 or (C₆H₅)₂ and other dihalide complexes, and the like; as well as bridged metallocenes which are like those above with z=1 per the above formula I, except with the following bridging groups (i.e., R' in the above formula I): Me₂Si, Et₂Si, Ph₂Si, MePhSi, MeEtSi, EtPhSi, Me₂Ge, Et₂Ge, Ph₂Ge, MePhGe, MeEtGe, MeCH, Me₂C, Et₂C, Ph₂C, MePhC, MeEtC, EtPhC, iPr₂C, t-Bu₂C, ethylene, tetramethylethylene, diphenyl ethylene, methyl ethylene, propylene, methylamine, butylene, and methyl phosphine.

The cocatalyst may be any of those known to one of ordinary skill in the art for activating the metal locene, and preferably, is one of the following: (a) branched or cyclic oligomeric poly(hydrocarbylaluminum oxide)s which contain repeating units of the general formula -(Al(R*)O)-, where R* is hydrogen, an alkyl radical containing from 1 to 12 carbon atoms, or an aryl radical such as a substituted or unsubstituted phenyl or naphthyl group; (b) ionic salts of the general formula [A⁺][BR**₄-], where A⁺ is a cationic Lewis or Bronsted acid capable of abstracting an alkyl, halogen, or hydrogen from the metallocene catalysts, B is boron, and R** is a substituted aromatic hydrocarbon, preferably a perfluorophenyl radical; and (c) boron alkyls of the general formula BR**₃, where R** is as defined above.

Preferably, the activating cocatalyst is an aluminoxane such as methylaluminoxane (MAO) or modified methylaluminoxane (MMAO), or a boron alkyl. Aluminoxanes are preferred and their method of preparation is well known in the art. Aluminoxanes may be in the form of oligomeric linear alkyl aluminoxanes represented by the formula: 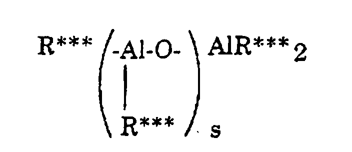 or oligomeric cyclic alkyl aluminoxanes of the formula: 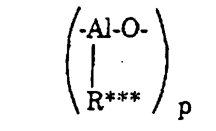 wherein s is 1-40, preferably 10-20; p is 3-40, preferably 3-20; and R*** is an alkyl group containing 1 to 12 carbon atoms, preferably methyl or an isobutyl radical.

When the process of the present invention is used for the preparation of metallocene procatalyst compounds which can be subsequently used in the formation of stereospecific polymers the choice of ligands is restricted. Acceptable ligands for this use of the process include Cp type ligands that when reacted with an alkyl compound of an alkali metal and subsequently with a transition metal salt result in the formation of metallocene compounds having as stereoisomers both a racemic modification and a meso form. When this is the desired use of the catalyst, the substituent is preferably of sufficient bulk to provide steric hindrance for the metal center. For this reason, bisindenyl and bis(substituted indenyls) groups are preferred. Generally, the two groups around the metal center are bridged to prevent rotation of the metallocene around the metal center; however, non-bridged groups can be employed as long as their size substantially minimizes rotation around the metal center. Ligands that are particularly preferred for use with the process in the production of iPP have a bridged-bisindenyl group and include dimethylsilyl-bisindenyl, (Indenyl)₂Si(CH₃)₂MCl₂, (Indenyl)₂C(Ph)₂ MCl₂, where M = Zr, Ti, Hf.

Ligands which may be used with the process may be prepared by using any number of processes known in the art. See e.g., US-A-4,985,576; and 110 J. AM. CHEM. SOC., 976, 976-978 (1988).

The reaction of the above ligands with an alkyl compound of alkali metals is known in the art. See e.g., US-A-4,931,417; EP-A-0 320 762. Any alkali-alkyl can be used, although Li, Na and K compounds are preferred, with Li compounds being the most preferred. Typically, the lithium alkyl or other alkali metal alkyl is added dropwise over a period of time to the ligand which has been previously slurried with a hydrocarbon solvent system. Other solvents, such as ethers, also may be present. The resultant product can be isolated by any of the known processes, including filtering or evaporation of the solvent. The product can be, and preferably is, subjected to further steps such as washing in an inert hydrocarbon, recrystallization, or grinding. Typical lithium alkyls employed include CH₃Li, n-C₃H₇Li, and n-C₄H₉Li. Particularly preferred is n-butyl lithium.

Metal halides and metal halide derivatives are typically employed as the transition metal salt which is reacted with the product of the ligand and alkali metal alkyl to produce the metallocene. Preferred salts for this invention are the tetrahalides of the previously indicated preferred transition metals, with tetrachlorides being particularly preferred.

The metal salt and the product of the reaction between the ligand and the alkali metal alkyl are reacted in the presence of an accelerant. Accelerants are compounds with a heteroatom having at least one lone pair of electrons in their outer valence shell that do not have a donateable or labile proton (that is, excluding compounds like primary and secondary amines, and primary and secondary phosphines). These accelerants include, but are not limited to ethers, such as diethyl ether, butyl ether and tetrahydrofuran (THF); tri, triaryl, or triaralkyl alkylphosphines, such as triethyl phosphine, trimethyl and triphenyl phosphine; tertiary alkyl, aryl, and aralkyl amines, such as trimethylamine, tripropylamine, and tributylamine; and pyridines, substituted or unsubstituted. Also included in this class are certain sulfur containing compounds. The accelerant may be present as a carryover material from a prior reaction step such as the reaction between the ligand and the alkali metal alkyl. Optionally, it can be added the transition metal salt and the product of the reaction between the ligand and the alkali metal alkyl once they are combined or to one of these reactants prior to the addition of the other.

When a solvent is not used, the amount of accelerant employed should be an amount greater than 0% and less than 70% by weight of the combined mass of the transition metal salt and the reaction product of alkali metal alkyl and ligand. Preferably the accelerant is used at an amount greater than 0% and less than 55% by weight, and, more preferably, between 40% and 55% by weight. In all cases, the accelerant is used in an amount insufficient to form a solution in which the accelerant would be the solvent, i.e., the accelerant is not to be used as the solvent.

When a solvent is used, the amount of accelerant employed should be an am owit greater than 0% and less than 20% by weight of the combined mass of the transition metal salt, the reaction product of alkali metal alkyl ligand and the non-polar solvent. Preferably, the accelerant is used at an amount greater than 0% (usually greater than 0.01%) and less than 10% by weight, and, more preferably, between 2% and 10% by weight. In all cases, the accelerant is used in an amount insufficient to form a solution in which the accelerant would be the solvent, i.e., the accelerant is not to be used as the solvent.

In contrast, if the metallocene procatalyst compound is produced in a quantity of accelerant sufficient to create a somewhat polar solvent system (e.g., with the accelerant as the solvent), the reaction mixture turns dark even when the mixture is maintained at low temperatures (25°C), which indicates the decomposition of the reaction intermediates.

The reaction between the transition metal salt and the product of the reaction between the ligand and the alkali metal alkyl in the presence of a small quantity of an accelerant may be conducted in a substantially non-polar solvent system, i.e., solvents with a dielectric constant less than 7. However, it is noted that it is not necessary for the reactants to be completely soluble in the chosen solvent. Non-limiting examples of non-polar solvents for this purpose include aromatic and non-aromatic hydrocarbons such as waxes, mineral oils, benzene, toluene, alkanes, and alkenes. Chlorinated solvents, such as chlorobenzene, can also be used, although they are not preferred. Preferred non-polar solvents are the alkanes and alkenes having 3 to 12 carbon atoms, more preferred are the alkanes having 3 to 8 carbon atoms, and most preferred is hexane.

The use of a non-polar solvent provides an advantage when metallocene procatalyst compounds are compounds are produced which can be utilized in the stereospecific formation of polymers. When a procatalyst compound which can exist as both a racemic modification and a meso form (and which is therefore potentially useful in stereospecific polymerizations) is desired, the use of a substantially non-polar solvent produces a metallocene procatalyst compound which can be used without the additional isolation and separation of the racemic form which is required as compared to when a polar solvent is used in the reaction between transition metal salt and the product of the ligand and the alkali metal alkyl reaction.

Because of the avoidance of these steps, the metallocene obtained herein is typically produced at higher yields than those previous processes in which a polar solvent was used.

The metal salt and the product of the reaction between the ligand and the alkali metal alkyl, existing generally as powders, can be mixed together prior to solvent addition or, alternatively, one of the powders can be added to the solvent prior to the addition of the other powder. Likewise, the point in the reaction at which the accelerant can be added is not limited. These alternatives include adding the accelerant to the combined reactants prior to solvent addition, adding the accelerant to one of the reactants either before, with, or after solvent addition, or adding the accelerant after the two reactants have been added to the solvent. Optionally, the accelerant may be present as a carry over material from a previous process step, such as the reaction between the ligand and the alkali metal alkyl. It is preferred that the accelerant be added to the suspension of the two reactants in an inert solvent.

The volume of accelerant used should not exceed 30% of the total solvent volume. The accelerant should be employed preferably in the range of 2% to 5% of the total solvent volume. Additionally, the amount of accelerant employed should fall within the range previously indicated regarding the mass of accelerant used relative to the combined mass of the transition metal salt and the reaction product of alkali metal alkyl and ligand.

The metal salt and the product of the reaction between the ligand and the alkali metal alkyl should be mixed thoroughly to aid the reaction. Preferably, mixing is aided by ball milling or mortar and pestle, although other means known in the art for mixing to ensure completeness of reaction may be employed. This preparation process does not require the use of a solvent. Observed color changes when the reactants, typically existing as powders, are combined and mixed indicate that the reaction proceeds relatively rapidly toward the desired procatalyst compound. When Zr is used, the observed color of the procatalyst compound is typically orange. When Hf is used, the procatalyst compound is typically light yellow to light orange. It is not necessary to remove the alkali metal halide which is formed in the reaction.

Color changes are again observed when the transition metal salt and the product of the reaction between the ligand and the alkali metal alkyl are combined in a non-polar solvent system containing a sufficient amount of accelerant. Conversely, when these materials are combined in a non-polar solvent system or with no accelerant present, no color change indicative of a reaction is observed within 48 hours.

The procatalyst compound formed by the presently disclosed method is distinct from previously known metallocenes in that it is insoluble in methylene dichloride at reflux conditions. In distinction, it is noted, that previously described metallocenes are soluble in methylene dichloride. By insoluble it is possible that a minute amount of metallocene does dissolve or is carried in the methylene dichloride, but such amount is less than 0.5 grams per liter of methylene dichloride.

The reaction which results in the formation of the procatalyst compound can be carried out under a variety of conditions. However, temperatures and pressures employed should be selected to ensure that neither the solvent nor the accelerant escapes the reaction vessel. The temperatures and pressures employed will therefore depend upon the boiling points of the compounds used as solvents and accelerants. Preferably, the reaction is conducted in a temperature range of between 10° to 30°C under pressures sufficient to ensure that the contents of the reactor vessel do not escape. The reaction can be conducted with or without mixing. Mixing or increased temperature results in a shorter reaction time. Preparation and storage of the metallocene is generally conducted under moisture and oxygen free conditions, typically in a dry box.

The metallocene product prepared can be recovered by any known means, including evaporation, decantation, or filtration. Filtration followed by an extended drying period is preferred. Drying may be done at 10°C to 70°C, preferably 25° to 40°C, and preferably under an inert gas, e.g., N₂. The product may be washed with several aliquots of a non-polar solvent which may or may not be the same as the non-polar solvent previously used. Washing in a non-polar solvent is preferred because, among other things, washing aids in the removal of unreacted intermediates and accelerant which may interfere with catalyst activation.

Alternatively, the metallocene obtained from the process of this invention can be used without isolating it from the solvent system in which it was produced. The cocatalyst can be added to the procatalyst compound which has not been separated from the solvent. The cocatalyst and procatalyst compound may be preactivated, prepolymerized, or not combined until the reactor, whichever mode is desired. The catalyst system existing as a suspension of procatalyst compound and cocatalyst in the solvent can be used in a polymerization. Although the use of this method is viable, it may be necessary to ensure any excess reactants and accelerant are removed; otherwise, catalyst activity might be detrimentally affected.

The amount of activating cocatalyst and metallocene catalyst in the catalyst composition, whether the catalyst composition is formed in situ as it is being introduced into the reaction zone or formed prior to introduction into the reaction zone, can vary over a wide range. When the cocatalyst is a branched or cyclic oligomeric poly(hydrocarbylaluminum oxide), the mole ratio of aluminum atoms contained in the poly(hydrocarbylaluminum oxide) to metal atoms contained in the metallocene catalyst is generally in the range of from 2:1 to 100,000:1, preferably in the range of from 10:1 to 10,000:1, and most preferably in the range of from 50:1 to 2,000:1. When the cocatalyst is an ionic salt of the formula [A⁺][BR*₄-] or a boron alkyl of the formula BR*₃, the mole ratio of boron atoms contained in the ionic salt or the boron alkyl to metal atoms contained in the metallocene catalyst is generally in the range of from 0.5:1 to 10:1, preferably in the range of from 1:1 to 5:1.

The catalyst, cocatalyst, or entire catalyst composition may be introduced to the reaction zone of the polymerization system on a solid support, in unsupported, liquid form such as a solution or dispersion, spray dried, in the form of a prepolymer, or formed in-situ in the reaction zone. In the case of a supported catalyst composition, typical supports include, for example, silica, carbon black, polyethylene, polycarbonate porous crosslinked polystyrene, porous crosslinked polypropylene, alumina, thoria, zirconia, and magnesium halide (e.g., MgCl₂) as well as other well known support materials and mixtures thereof. When supported, the catalyst and/or the activating cocatalyst are impregnated in or deposited on the surface of the inert support substrate, such that the impregnated material is between 1 and 90 percent by weight of the total weight of the impregnated material and the support.

Particularly preferred among these is a catalyst composition that is spray dried or in unsupported, liquid form. For example, the catalyst composition may be introduced into the reaction zone in unsupported, liquid form as described in US-A-5,317,036. As used herein, "unsupported, liquid form" includes liquid catalyst, liquid cocatalyst, solution(s) or dispersions of catalyst and cocatalyst in the same or different solvent(s), and combinations thereof. Unsupported, liquid form catalyst compositions have a number of practical benefits. Unsupported catalyst compositions avoid the costs associated with a support material and its preparation, and they provide for the realization of a very high catalyst surface area to volume ratio. Furthermore, unsupported catalyst compositions produce polymers having a much lower residual ash content than polymers produced using supported catalyst compositions.

According to the invention, polymer build up or fouling in an olefin polymerization system employing a catalyst composition described above may be inhibited by introducing into the polymerization system an antifouling agent. Preferably, the antifouling agent is an ether, alcohol, ketone, aldehyde, carboxylic acid, ester, carbonate, phosphine, phosphine oxide, phosphate, phosphite, amine, amide, nitrile, alkoxy silane, aluminum alkoxide, oxygen, nitric oxide, carbon oxide, and the like.

As stated above, the present invention is particularly suited to make stereospecific polymers. Stereospecificity can be measured by the amount of xylene solubles present in the resulting polymer. Generally, it is desirable to have xylene solubles of less than 7 wt%, and more preferably less than 4 wt.% which would indicate stereospecific polymerization.

The invention is applicable to the polymerization of olefins by any suspension, solution, slurry, or gas phase process, using known equipment and reaction conditions, and is not limited to any specific type of polymerization system. Generally, olefin polymerization temperatures range from 0°C to 200°C at atmospheric, subatmospheric, or superatmospheric pressures. Slurry or solution polymerization systems may utilize subatmospheric or superatmospheric pressures and temperatures in the range of about 40°C to 110°C. A useful liquid phase polymerization system is described in US-A-3,324,095. Liquid phase polymerization systems generally comprise a reactor to which olefin monomer and catalyst composition are added, and which contains a liquid reaction medium for dissolving or suspending the polyolefin. The liquid reaction medium may consist of the bulk liquid monomer or an inert liquid hydrocarbon that is nonreactive under the polymerization conditions employed. Although such an inert liquid hydrocarbon need not function as a solvent for the catalyst composition or the polymer obtained by the process, it usually serves as solvent for the monomers employed in the polymerization. Among the inert liquid hydrocarbons suitable for this purpose are isopentane, hexane, cyclohexane, heptane, benzene, toluene, and the like. Reactive contact between the olefin monomer and the catalyst composition should be maintained by constant stirring or agitation. The reaction medium containing the olefin polymer product and unreacted olefin monomer is withdrawn from the reactor continuously. The olefin polymer product is separated, and the unreacted olefin monomer and liquid reaction medium are recycled into the reactor.

The invention is, however, especially useful with gas phase polymerization systems, with superatmospheric pressures in the range of 6,9·10³-6,9·10⁶ Pa (1 to 1000 psi), preferably 3,4·10⁵-2,8·10⁶Pa (50 to 400 psi), most preferably 6,9·10⁵-2.0·10⁶Pa (100 to 300 psi), and temperatures in the range of 30 to 130°C, preferably 65 to 110°C. Stirred or fluidized bed gas phase polymerization systems are particularly useful. Generally, a conventional gas phase, fluidized bed process is conducted by passing a stream containing one or more olefin monomers continuously through a fluidized bed reactor under reaction conditions and in the presence of catalyst composition at a velocity sufficient to maintain a bed of solid particles in a suspended condition. A stream containing unreacted monomer is withdrawn from the reactor continuously, compressed, cooled, optionally partially or fully condensed, and recycled into the reactor. Product is withdrawn from the reactor and make-up monomer is added to the recycle stream. As desired for temperature control of the polymerization system, any gas inert to the catalyst composition and reactants may also be present in the gas stream. In addition, a fluidization aid such as carbon black, silica, clay, or talc may be used, as disclosed in US-A-4,994,534.

The polymerization system may comprise a single reactor or two or more reactors in series, and is conducted substantially in the absence of catalyst poisons. Conventional adjuvants, including scavenging agents, may be used in the process, provided they do not interfere with the operation of the catalyst composition in forming the desired polyolefin. Hydrogen may be used as a chain transfer agent in the process, in amounts up to 10 moles of hydrogen per mole of total monomer feed.

Olefin polymers that may be produced according to the invention include, but are not limited to, ethylene homopolymers, homopolymers of linear or branched higher olefins containing 3 to 20 carbon atoms, and interpolymers of such olefins, with densities ranging from 0.86 to 0.95. Suitable higher olefins include, for example, propylene, 1-butene, 1-pentene, 1-hexene, 4-methyl-1-pentene, 1-octene, and 3,5,5-trimethyl-1-hexene. Though, because of the utility of the present invention with stereospecific polymerizations, it is preferred to use olefin momomers which take advantage of same, e.g., propylene. Olefin polymers according to the invention may also be based on or contain conjugated or non-conjugated dienes, such as linear, branched, or cyclic hydrocarbon dienes having from 4 to 20, preferably 4 to 12, carbon atoms. Preferred dienes include 1,4-pentadiene, 1,5-hexadiene, 5-vinyl-2-norbornene, 1,7-octadiene, vinyl cyclohexene, dicyclopentadiene, butadiene, isobutylene, isoprene, ethylidene norbornene and the like. Aromatic compounds having vinyl unsaturation such as styrene and substituted styrenes, and polar vinyl monomers such as acrylonitrile, maleic acid esters, vinyl acetate, acrylate esters, methacrylate esters, vinyl trialkyl silanes and the like may be polymerized according to the invention as well. Specific olefin polymers that may be made according to the invention include, for example, polyethylene, polypropylene, ethylene/propylene rubbers (EPR's), ethylene/propylene/diene terpolymers (EPDM's), polybutadiene, polyisoprene and the like.

### EXAMPLES

### EXAMPLE 1

### A. Preparation of the Ligand

20.0 grams (g) indene (172 mmol) was dissolved in 30 mL diethyl ether. This was cooled to 0°C in an ice bath. 53.5 mL C₄H₉Li (133 mmol, 2.5 M in hexane) was added dropwise over 75 minutes. The resulting orange solution of indenyl lithium was warmed to room temperature and stirred for 15 minutes. The solution was transferred to a dropping funnel attached to a flask containing (CH₃)₂SiCl₂ (8.4 g, 65 mmol, in 20 mL of diethyl ether). This indenyl lithium solution was added to the (CH₃)₂SiCl₂ solution dropwise over 2.5 hours. The resulting solution was stirred overnight. The solution was washed with a saturated solution of sodium chloride in water, and extracted with diethyl ether. The ether layer was dried twice over MgSO₄. Ether was removed in vacuo, and the residue was warmed to 40° C under vacuum to remove any unreacted indene. The residue bisindenyl(CH₃)₂Si was crystallized from methanol, and the resulting solid was dried in vacuo (yield 14.84 g, 79%). ¹H NMR of the product in CDCl₃ is consistent with the presence of the two diastereomers.

### B. Reaction of the Ligand and Alkyllithium

8.0 g bisindenyl(CH₃)₂Si (27.7 mmol) was slurried in 10 mL diethyl ether and 15 mL hexane. The resulting slurry was cooled to 0°C, and C₄H₉Li (55 mmol, 2.5 M in hexane) was added dropwise over 1 hour. The resulting solution was warmed to room temperature (about 25°C) and stirred for 2 hours. The precipitate was filtered and washed twice with hexane. The precipitate [bisindenyl(CH₃)₂Si]Li₂ was dried under vacuum overnight (yield 9.93 g, 94%).

### C. Reaction of the Transition Metal Salt with the Lithium Salt of the Ligand

7.00 g [bisindenyl(CH₃)₂Si]Li₂ (19.4 mmol) was added to 4.30g ZrCl₄(18.4 mnol) in the dry box, and the two solids were mixed thoroughly at 25°C. 75 mL hexane was added to the mixture and the resulting suspension was stirred. 2 mL diethyl ether was then added dropwise with a syringe over a period of 2 minutes. The reaction mixture gradually turned orange, and was stirred for 20 hours. The resulting mixture was filtered and washed with hexane. The solid [Reaction Product C] was dried in vacuo for 15 hours (yield 8.92 g, 90.39%). (CH₃)₂Si-bisindenylZrCl₂ produced in this reaction exists as both the racemic modification and meso form. The ¹H NMR is consistent with the presence of both the racemic modification and the meso form. The product obtained from this reaction exhibits lower solubility in polar solvents such as THF than previously described metallocenes. Attempts to purify the reaction product by extracting it in CH₂Cl₂ at reflux were unsuccessful, even at reflux conditions. The compound was insoluble in CH₂Cl₂. This would indicate that the catalyst was different than those previously described in the art.

### D. Polymerization of Propylene

22 mmol methylalumoxane was combined with 50 mL isooctane. The resultant solution was injected into a 3.8 L autoclave equipped with a mechanical stirrer. The autoclave contained 650 g of liquid propylene and was maintained at a temperature in the range of 60°-90°C. After 15 minutes, 0.011 mmol based on Zr of the Reaction Product C which had been dissolved in 50 mL of isooctane was injected into the autoclave. The contents of the reactor were allowed to polymerize in the absence of hydrogen for 60 minutes. After the 60 minutes, the reaction was stopped by venting off unreacted monomer. The 338 g polymer produced was highly isotactic, exhibited by an isotacticity index of 95.3% and xylene solubles of 1.8%, and had a narrow MWD, exhibited by a Mw/Mn value of 2.3.

### EXAMPLE 2

A metallocene procatalyst compound was prepared according to the steps indicated in Example 1, except that 18.4 mmol of HfCl₄ were used rather than an equivalent molar amount of ZrCl₄. A light yellow solid comprising (CH₃)₂Si-bisindenylHfCl₂was obtained from the series of reactions.

For the polymerization of the procatalyst compound thus produced, 0.0192 mmol (based on Hf) of the light yellow reaction product and 9.8 mmol methylalumoxane were charged to a reactor previously containing 1300 g of liquid propylene to produce 22 g polymer having a xylene solubles of 7.0 %. The polymer had a Mw/Mn of 12.9. However, this broader than expected MWD can be attributed to the presence of ZrCl₄ at a level of 5% in the HfCl₄ employed.

### COMPARATIVE EXAMPLE 1

The preparation of the metallocene procatalyst compound (CH₃)₂Si-bisindenylZrCl₂ was prepared according to the steps indicated in Example 1, except that in step C, 75 mL THF, a polar solvent, was used rather than 75 mL of hexane. When the ZrCl₄ was combined with the [bisindenyl(CH₃)₂Si]Li₂ in the solution of THF, the reaction mixture immediately turned dark. The reaction was exothermic. As known in the art, the dark color suggested that a decomposition reaction, probably involving the lithiated ligand, had occurred. As is generally known in the art that any solid recovered from such a reaction will not be useful as a catalyst component for the production of stereospecific polyolefins, no additional efforts were taken with regards to this Example.

### COMPARATIVE EXAMPLE 2

The preparation of the metallocene procatalyst compound (CH₃)₂Si-bisindenylZrCl₂ was prepared according to the steps indicated in Example 1, except that in step C, no accelerant was employed. Only the 75 mL hexane was added to the mixture of [bisindenyl(CH₃)₂Si]Li₂ and ZrCl₄. After 4 hours of stirring, no color change indicative of a desired reaction between the two materials was observed.

### EXAMPLE 3

A metallocene procatalyst, (CH₃)₂Si-bisindenylHfCl₂, was prepared according to the steps indicated in Example 1, except that no solvent was used in step C and HfCl₄•2THF was used instead of ZrCl₄, and where the transition metal salt was reacted with the product of the reaction between the ligand and the alkali metal alkyl.

0.403 g [bisindenyl(CH₃)₂Si]Li₂ was added to 0.5 g HfCl₄•2THF in a mortar, located in a dry box maintained between 25°-30° C. The materials were mixed thoroughly with a pestle. Upon the commencing of mixing, the contents of the mortar began to turn yellow within five minutes.

The production of the yellow (CH₃)₂Si-bisindenylHfCl₂ indicates that the metallocenes of the present invention can be obtained by a solvent-free process. However, as previously indicated, use of a solvent in a subsequent step is preferred for the removal of the unreacted intermediates and the production of uniformly-sized metallocene particles. Therefore, in this example, 30 mL of hexane was added to the yellow solid obtained above. The combination was stirred overnight. Afterwards, the yellow solid comprising (CH₃)₂Si-bisindenylHfCl₂ and LiCl was isolated from the solution by filtration. The resultant solid was washed with hexane and dried under vacuo (yield 0.37 g) and then used in a polymerization process as indicated in Example 1.

## Claims

1. A metallocene procatalyst compound that has a solubility, at reflux conditions, in methylene dichloride in an amount less than 0.5 grams per liter, and that is useful in making stereospecific polymers, the metallocene procatalyst compound being obtainable by a process comprising: reacting (a) the reaction product of a reactant comprising at least one cyclopentadienyl, indenyl or fluorenyl ligand group, with an alkyl compound containing an alkali metal; with (b) a transition metal salt in the presence of (c) an accelerant comprising a compound with a heteroatom having at least one lone pair of electrons in the outer valence shell, but not a labile proton, and optionally (d) a solvent, wherein, when a solvent is not used during reaction of (a) and (b), the quantity of accelerant employed is less than 70 percent by weight of the combined mass of the reaction product (a) and the transition metal salt (b), and wherein, if a solvent is used during the reaction of (a) and (b), the quantity of accelerant employed is less than 20 percent by weight of the combined mass of the reaction product (a), the transition metal salt (b) and the solvent.

2. The metallocene according to claim 1, wherein the accelerant (c) is selected from the group consisting of ethers, tertiary phosphines, tertiary amines, and pyridine.

3. The metallocene according to claim 1 or 2, wherein the accelerant is employed at between 40 percent and 55 percent by weight of the combined mass of the reaction product (a) and the transition metal salt (b).

4. The metallocene of claim 1 or 2, wherein the reaction between the reaction product (a) and transition metal salt (b) in the presence of an accelerant (c) is conducted in a non-polar solvent and the accelerant is present at less than 10 percent by weight of the combined mass of the reaction product (a), the transition metal salt (b) and the non-polar solvent.

5. A metallocene of the structure (L)_{y}R¹_{z}(L')MX_{(x-y-1)} wherein M is a metal selected from groups IIIB to VIII or a rare earth metal; L and L' are the same or different and are π-bonded ligands coordinated to M, R¹ is selected from the group consisting of C₁-C₄ substituted or unsubstituted alkylene radicals, dialkyl or diaryl germanium or silicon groups, and alkyl or aryl phosphine or amine radicals bridging L and L'; each X is independently hydrogen, an aryl, alkyl, alkenyl, alkylaryl, or arylalkyl radical having 1-20 carbon atoms, a hydrocarboxy radical having 1-20 carbon atoms, a halogen, R²CO₂-, or R²₂NCO₂-, wherein each R² is a hydrocarbyl group containing 1 to 20 carbon atoms; y is 0, 1, or 2; x is 1, 2, 3, or 4 depending upon the valence state of M; z is 0 or 1 and is 0 when y is 0; and x-y≥1; wherein the metallocene has a solubility, at reflux conditions, in methylene dichloride in an amount less than 0.5 grams per liter.

6. A process of making a metallocene procatalyst compound as defined in any one of claims 1 to 5 that is useful in making stereospecific polymers comprising: reacting (a) the reaction product of a compound comprising at least one cyclopentadienyl, indenyl or fluorenyl ligand group with an alkyl compound containing an alkali metal with (b) a transition metal salt in the presence of (c) an accelerant comprising a compound with a heteroatom having at least one lone pair of electrons in the outer valence shell, but not a labile proton, optionally in the presence of (d) a solvent, wherein, when a solvent is not used in during reaction of (a) and (b), the quantity of accelerant employed is less than 70 percent by weight of the combined mass of the reaction product (a) and the transition metal salt (b), and wherein, if a solvent is used during reaction of (a) and (b), the quantity of accelerant employed is less than 20 percent by weight of the combined mass of the reaction product (a), the transition metal salt (b) and the solvent.

7. The process according to claim 6, wherein the accelerant (c) is selected from the group consisting of ethers, tertiary phosphines, tertiary amines, and pyridine.

8. The process according to claim 6, wherein the accelerant (c) is selected from the group consisting of diethylether and tetrahydrofuran.

9. The process according to any one of claims 6 to 8, wherein the accelerant (c) is employed at between 40 percent and 55 percent by weight of the combined mass of the reaction product (a) and the transition metal salt (b).

10. The process according to any one of claims 6 to 8, wherein the reaction between the reaction product (a) and transition metal salt (b) in the presence of an accelerant (c) is conducted in a non-polar solvent and the accelerant is present at less than 10 percent by weight of the combined mass of the reaction product (a), the transition metal salt (b) and the non-polar solvent.

11. A process of making a metallocene compound having the formula: (L)_{y}R¹_{z}(L')MX_{(x-y-1)} wherein M is a metal selected from groups IIIB to VIII; L and L' are the same or different and are n-bonded cyclopentadienyl, indenyl or fluorenyl ligands coordinated to M, R¹ is selected from the group consisting of C₁-C₄ substituted or unsubstituted alkylene radicals, dialkyl, or diaryl germanium or silicon groups, and alkyl or aryl phosphine or amine radicals bridging L and L'; each X is independently hydrogen, an aryl, alkyl, alkenyl, alkylaryl or arylalkyl radical having 1-20 carbon atoms, a hydrocarboxy radical having 1-20 carbon atoms, a halogen, R²CO₂₋, or R²₂NCO₂, wherein each R² is a hydrocarbyl group containing 1 to 20 carbon atoms; y is 0, 1, or 2; x is 1, 2, 3, or 4 depending upon the valence state of M; z is 0 or 1 and is 0 when y is 0; and x-y>1, the steps of the process comprising reacting (a) the reaction product of a compound comprising at least one cyclopentadienyl, indenyl or fluorenyl ligand group with an alkali metal alkyl compound with (b) a transition metal salt in the presence of (c) an accelerant selected from ethers, tertiary phosphines, tertiary amines and pyridine, optionally in the presence of (d) a solvent, wherein, when a solvent is not used during reaction of (a) and (b), the quantity of accelerant employed is less than 70 percent by weight of the combined mass of the reaction product (a) and the transition metal salt (b), and wherein, if a solvent is used during reaction (a) and (b), the quantity of accelerant employed is less than 20 percent by weight of the combined mass of the reaction product (a), the transition metal salt (b) and the solvent.

12. A metallocene compound having the formula: (L)_{y}R¹_{z}(L')MX_{(x-y-1)} wherein M is a metal selected form groups IIIB to VIII; L and L' are the same or different and are n-bonded cyclopentadienyl, indenyl or fluorenyl ligands coordinated to M, R¹ is selected from the group consisting of C₁-C₄ substituted or unsubstituted alkylene radicals, dialkyl or diaryl germanium or silicon groups, and alkyl or aryl phosphine or amine radicals bridging L and L'; each X is independently hydrogen, an aryl, alkyl, alkenyl, alkylaryl, or arylalkyl radical having 1-20 carbon atoms, a hydrocarboxy radical having 1-20 carbon atoms, a halogen, or R²CO₂₋, or R²₂NCO₂₋, wherein each R² is a hydrocarbyl group containing 1 to 20 carbon atoms; y is 0, 1, or 2; x is 1, 2, 3, or 4 depending upon the valence state of M; z is 0 or 1 and is 0 when y is 0; and x-y≥1, wherein the metallocene has a solubility, at reflux conditions, in methylene dichloride in an amount less than 0.5 grams per liter.

## Patentansprüche

1. Metallocen-Prokatalysatorverbindung, die bei Rückflussbedingungen eine Löslichkeit in Methylendichlorid in einer Menge von weniger als 0,5 g pro Liter aufweist und die zur Herstellung von stereospezifischen Polymeren geeignet ist, wobei die Metallocen-Prokatalysatorverbindung durch ein Verfahren erhältlich ist, das umfasst: Umsetzen von (a) dem Reaktionsprodukt eines Reaktanten, der mindestens eine Cyclopentadienyl-, Indenyl- oder Fluorenylligandengruppe enthält, mit einer Alkylverbindung, die ein Alkalimetall enthält: mit (b) einem Übergangsmetallsalz in Gegenwart von (c) einem Beschleuniger, der eine Verbindung mit einem Heteroatom enthält, das mindestens ein freies Elektronenpaar in der äußeren Valenzschale, aber kein labiles Proton aufweist, und wahlweise (d) einem Lösungsmittel, wobei, wenn kein Lösungsmittel während der Reaktion von (a) und (b) verwendet wird, die Menge des eingesetzten Beschleunigers weniger als 70 Gew.-% der vereinigten Masse des Reaktionsproduktes (a) und des Übergangsmetallsalzes (b) beträgt, und wobei, wenn ein Lösungsmittel während der Reaktion von (a) und (b) verwendet wird, die Menge des eingesetzten Beschleunigers weniger als 20 Gew.-% der vereinigten Masse des Reaktionsproduktes (a), des Übergangsmetallsalzes (b) und des Lösungsmittels beträgt.

2. Metallocen nach Anspruch 1, wobei der Beschleuniger (c) ausgewählt ist aus der Gruppe bestehend aus Ethern, tertiären Phosphinen, tertiären Aminen und Pyridin.

3. Metallocen nach Anspruch 1 oder 2, wobei der Beschleuniger in zwischen 40 und 55 Gew.-% der vereinigten Masse des Reaktionsproduktes (a) und des Übergangsmetallsalzes (b) eingesetzt wird.

4. Metallocen nach Anspruch 1 oder 2, wobei die Reaktion zwischen dem Reaktionsprodukt (a) und dem Übergangsmetallsalz (b) in Gegenwart eines Beschleunigers (c) in einem unpolaren Lösungsmittel durchgeführt wird und der Beschleuniger in weniger als 10 Gew.-% der vereinigten Masse des Reaktionsproduktes (a), des Übergangsmetallsalzes (b) und des unpolaren Lösungsmittels vorhanden ist.

5. Metallocen der Struktur (L)_{y}R¹_{z}(L')MX_{(x-y-1)}, wobei M ein Metall ausgewählt aus den Gruppen IIIB bis VIII oder ein Seltenerdmetall ist; L und L' gleich oder unterschiedlich und π-gebundene Liganden sind, die an M koordiniert sind. R¹ ausgewählt ist aus der Gruppe bestehend aus substituierten oder unsubstituierten C₁-C₄-Alkylenresten, Dialkyl- oder Diarylgermanium- oder Siliciumgruppen und Alkyl- oder Arylphosphin- oder Aminresten, die L und L' verbrücken; jedes X unabhängig voneinander Wasserstoff, ein Aryl-, Alkyl-, Alkenyl-, Alkylaryl- oder Arylalkylrest mit 1 bis 20 Kohlenstoffatomen, ein Hydrocarboxyrest mit 1 bis 20 Kohlenstoffatomen, ein Halogen, R²CO₂- oder R²₂NCO₂- ist, worin jedes R² eine Hydrocarbyl gruppe mit 1 bis 20 Kohlenstoffatomen ist: y gleich 0, 1 oder 2 ist; x gleich 1, 2, 3 oder 4 ist in Abhängigkeit der Valenzstufe von M; z gleich 0 oder 1 ist und 0 ist, wenn y gleich 0 ist, und x-y ≥ 1 ist, wobei das Metallocen unter Rückflussbedingungen in Methylendichlorid eine Löslichkeit in einer Menge von weniger als 0,5 g pro Liter aufweist.

6. Verfahren zur Herstellung einer Metallocen-Prokatalysatorverbindung wie in einem der Ansprüche 1 bis 5 definiert, die bei der Herstellung von stereospezifischen Polymeren geeignet ist, umfassend: Umsetzen von (a) dem Reaktionsprodukt einer Verbindung, die mindestens eine Cyclopentadienyl-, Indenyl- oder Fluorenylligandengruppe enthält, mit einer Alkylverbindung, die ein Alkalimetall enthält, mit (b) einem Übergangsmetallsalz in Gegenwart von (c) einem Beschleuniger, der eine Verbindung mit einem Heteroatom enthält, das mindestens ein freies Elektronenpaar in der äußeren Valenzschale, aber kein labiles Proton aufweist, wahlweise in Gegenwart von (d) einem Lösungsmittel, wobei, wenn kein Lösungsmittel während der Reaktion von (a) und (b) verwendet wird, die Menge des eingesetzten Beschleunigers weniger als 70 Gew.-% der vereinigten Masse des Reaktionsproduktes (a) und des Übergangsmetallsalzes (b) beträgt, und wobei, wenn ein Lösungsmittel während der Reaktion von (a) und (b) verwendet wird, die Menge des eingesetzten Beschleunigers weniger als 20 Gew.-% der vereinigten Masse des Reaktionsproduktes (a), des Übergangsmetallsalzes (b) und des Lösungsmittels beträgt.

7. Verfahren nach Anspruch 6, wobei der Beschleuniger (c) ausgewählt ist aus der Gruppe bestehend aus Ethern, tertiären Phosphinen, tertiären Aminen und Pyridin.

8. Verfahren nach Anspruch 6, wobei der Beschleuniger (c) aus der Gruppe bestehend aus Diethylether und Tetrahydrofuran ausgewählt ist.

9. Verfahren nach einem der Ansprüche 6 bis 8, wobei der Beschleuniger in zwischen 40 und 55 Gew.-% der vereinigten Masse des Reaktionsproduktes (a) und des Übergangsmetallsalzes (b) eingesetzt wird.

10. Verfahren nach einem der Ansprüche 6 bis 8, wobei die Reaktion zwischen dem Reaktionsprodukt (a) und dem Übergangsmetallsalz (b) in Gegenwart eines Beschleunigers (c) in einem unpolaren Lösungsmittel durchgeführt wird und der Beschleuniger in weniger als 10 Gew.-% der vereinigten Masse des Reaktionsproduktes (a), des Übergangsmetallsalzes (b) und des unpolaren Lösungsmittels vorhanden ist.

11. Verfahren zur Herstellung einer Metallocenverbindung der Strukturformel (L)_{y}R¹_{z}(L')MX_{(x-y-1)}, wobei M ein Metall ausgewählt aus den Gruppen IIIB bis VIII ist; L und L' gleich oder unterschiedlich und π-gebundene Cyclopentadienyl-, Indenyl- oder Fluorenylliganden sind. die an M koordiniert sind, R¹ ausgewählt ist aus der Gruppe bestehend aus substituierten oder unsubstituierten C₁-C₄-Alkylenresten, Dialkyl- oder Diarylgermanium- oder Siliciumgruppen und Alkyl- oder Arylphosphin- oder Aminresten, die L und L' verbrücken; jedes X unabhängig voneinander Wasserstoff, ein Aryl-, Alkyl-, Alkenyl-, Alkylaryl- oder Arylalkylrest mit 1 bis 20 Kohlenstoffatomen, ein Hydrocarboxyrest mit 1 bis 20 Kohlenstoffatomen, ein Halogen, R²CO₂- oder R²₂NCO₂- ist, worin jedes R² eine Hydrocarbylgruppe mit 1 bis 20 Kohlenstoffatomen ist; y gleich 0, 1 oder 2 ist; x gleich 1, 2, 3 oder 4 ist in Abhängigkeit der Valenzstufe von M; z gleich 0 oder 1 ist und 0 ist, wenn y gleich 0 ist, und x-y ≥ 1 ist, wobei die Stufen des Verfahrens umfassen: Umsetzen von (a) dem Reaktionsprodukt einer Verbindung, die mindestens eine Cyclopentadienyl-, Indenyl- oder Fluorenylligandengruppe enthält, mit einer Alkalimetall-Alkylverbindung mit (b) einem Übergangsmetallsalz in Gegenwart von (c) einem Beschleuniger, ausgewählt aus Ethern, tertiären Phosphinen, tertiären Aminen und Pyridin, wahlweise in Gegenwart von (d) einem Lösungsmittel, wobei, wenn kein Lösungsmittel während der Reaktion von (a) und (b) verwendet wird, die Menge des eingesetzten Beschleunigers weniger als 70 Gew. -% der vereinigten Masse des Reaktionsproduktes (a) und des Übergangsmetallsalzes (b) beträgt, und wobei, wenn ein Lösungsmittel während der Reaktion von (a) und (b) verwendet wird, die Menge des eingesetzten Beschleunigers weniger als 20 Gew.-% der vereinigten Masse des Reaktionsproduktes (a), des Übergangsmetallsalzes (b) und des Lösungsmittels beträgt.

12. Metallocenverbindung der Formel (L)_{y}R¹_{z}(L')MX_{(x-y-1)}, wobei M ein Metall ausgewählt aus den Gruppen IIIB bis VIII ist; L und L' gleich oder unterschiedlich und π-gebundene Cyclopentadienyl-, Indenyl- oder Fluorenylliganden sind, die an M koordiniert sind, R¹ ausgewählt ist aus der Gruppe bestehend aus substituierten oder unsubstituierten C₁-C₄-Alkylenresten, Dialkyl- oder Diarylgermanium- oder Siliciumgruppen und Alkyl- oder Arylphosphin- oder Aminresten, die L und L' verbrücken; jedes X unabhängig voneinander Wasserstoff, ein Aryl-, Alkyl-, Alkenyl-, Alkylaryl- oder Arylalkylrest mit 1 bis 20 Kohlenstoffatomen, ein Hydrocarboxyrest mit 1 bis 20 Kohlenstoffatomen, ein Halogen oder R²CO₂- oder R²₂NCO₂- ist, worin jedes R² eine Hydrocarbylgruppe mit 1 bis 20 Kohlenstoffatomen ist; y gleich 0, 1 oder 2 ist; x gleich 1, 2, 3 oder 4 ist in Abhängigkeit der Valenzstufe von M; z gleich 0 oder 1 ist und 0 ist, wenn y gleich 0 ist, und x-y ≥ 1 ist, wobei das Metallocen unter Rückflussbedingungen in Methylendichlorid eine Löslichkeit in einer Menge von weniger als 0,5 g pro Liter aufweist.

## Revendications

1. Composé procatalyseur métallocène ayant une solubilité, dans des conditions de reflux, dans le dichlorure de méthylène d'une quantité inférieure à 0,5 gramme par litre, et qui est utile dans la préparation de polymères stéréospécifiques, le composé procatalyseur métallocène pouvant être obtenu par un procédé comprenant : la mise en réaction (a) du produit de réaction d'un réactif comprenant au moins un groupe ligand cyclopentadiényle, indényle ou fluorényle, avec un composé alkyle contenant un métal alcalin ; avec (b) un sel de métal de transition en présence de (c) un accélérateur comprenant un composé avec un hétéroatome ayant au moins un doublet isolé d'électrons dans la couche valentielle extérieure, mais pas un proton labile, et facultativement (d) un solvant, dans laquelle, lorsqu'un solvant n'est pas utilisé pendant la réaction de (a) et (b), la quantité d'accélérateur utilisée est inférieure à 70 pour cent en poids de la masse combinée du produit de réaction (a) et du sel de métal de transition (b) et dans laquelle, si un solvant est utilisé pendant la réaction de (a) et (b), la quantité d'accélérateur utilisée est inférieure à 20 pour cent en poids de la masse combinée du produit de réaction (a), du sel de métal de transition (b) et du solvant.

2. Métallocène selon la revendication 1, dans lequel l'accélérateur (c ) est choisi dans le groupe constitué d'éthers, de phosphines tertiaires, d'amines tertiaires, et de pyridine

3. Métallocène selon la revendication 1 ou 2, dans lequel l'accélérateur est utilisé en une quantité entre 40 pour cent et 55 pour cent en poids de la masse combinée du produit de réaction (a) et du sel de métal de transition (b).

4. Métallocène selon la revendication 1 ou 2, dans lequel la réaction entre le produit de réaction (a) et le sel de métal de transition (b) en présence d'un accélérateur (c) est effectuée dans un solvant non polaire et l'accélérateur est présent à moins de 10 pour cent en poids de la masse combinée du produit de réaction (a), du sel de métal de transition (b) et du solvant non polaire.

5. Métallocène ayant la structure (L)_{y}R¹_{z}(L')MX_{(x-y-1)} où M est un métal choisi dans les groupes IIIB à VIII ou un métal des terres rares ; L et L' sont identiques ou différents et sont des ligands à liaison π coordonnés à M, R¹ est choisi dans le groupe constitué de radicaux alcylène en C₁-C₄ substitués ou non substitués, de groupes diaryle ou dialkyle de silicium ou de germanium, et de radicaux aryl- ou alkyl- amine ou phosphine qui forment un pont entre L et L' ; chaque X est indépendamment de l'hydrogène, un radical aryle, alkyle, alcényle, alkylaryle, ou arylalkyle ayant 1-20 atomes de carbone, un radical hydrocarboxy ayant 1-20 atomes de carbone, un halogène, R²CO₂₋, ou R²₂NCO₂₋, dans lesquels chaque R² est un groupe hydrocarbyle contenant de 1 à 20 atomes de carbone ; y équivaut à 0, 1 ou 2 ; x équivaut à 1, 2, 3 ou 4 en fonction de l'état de valence de M ; z équivaut à 0 ou 1 et est égal à 0 quand y est égal à 0 ; et x-y ≥ 1 ; le métallocène ayant une selubiliLé, dans des conditions de reflux, dans le dichlorure de méthylène d'une quantité inférieure à 0,5 gramme par litre.

6. Procédé de préparation d'un composé procatalyseur métallocène comme défini dans l'une quelconque des revendications 1 à 5, qui est utile pour la préparation de polymères stéréospécifiques comprenant : la mise en réaction (a) du produit de réaction d'un composé comprenant au moins un groupe ligand cyclopentadiényle, indényle ou fluorényle avec un composé alkyle contenant un métal alcalin avec (b) un sel de métal de transition en présence de (c) un accélérateur comprenant un composé avec un hétéroatome ayant au moins un doublet isolé d'électrons dans la couche valentielle extérieure, mais pas un proton labile, facultativement en présence de (d) un solvant, dans laquelle, lorsqu'un solvant n'est pas utilisé pendant la réaction de (a) et (b), la quantité d'accélérateur utilisée est inférieure à 70 pour cent en poids de la masse combinée du produit de réaction (a) et du sel de métal de transition (b), et dans laquelle, si un solvant est utilisé pendant la réaction de (a) et (b), la quantité d'accélérateur utilisée est inférieure à 20 pour cent en poids de la masse combinée du produit de réaction (a), du sel de métal de transition (b) et du solvant.

7. Procédé selon la revendication 6, dans lequel l'accélérateur (c) est choisi dans le groupe constitué d'éthers, de phosphines tertiaires, d'amines tertiaires, et de pyridine.

8. Procédé selon la revendication 6, dans lequel l'accélérateur (c) est choisi dans le groupe constitué de diéthyléther et de tétrahydrofuranne.

9. Procédé selon l'une quelconque des revendications 6 à 8, dans lequel l'accélérateur (c) est utilisé en une quantité entre 40 et 55 pour cent en poids de la masse combinée du produit de réaction (a) et du sel de métal de transition (b).

10. Procédé selon l'une quelconque des revendications 6 à 8, dans lequel la réaction entre le produit de réaction (a) et le sel de métal de transition (b) en présence d'un accélérateur (c) est effectuée dans un solvant non polaire et l'accélérateur est présent à moins de 10 pour cent en poids de la masse combinée du produit de réaction (a), du sel de métal de transition (b) et du solvant non polaire.

11. Procédé de préparation d'un composé métallocène ayant la formule : (L)_{y}R¹_{z}(L')MX_{(x-y-1)} où M est un métal choisi dans les groupes IIIB à VIII ; L et L' sont identiques ou différents et sont des ligands cyclopentadiényle, indényle ou fluorényle à liaison π coordonnés à M, R¹ est choisi dans le groupe constitué de radicaux alcylène en C₁-C₄ substitués ou non substitués, de groupes diaryle ou dialkyle de silicium ou de germanium, et de radicaux aryl- ou alkyl- amine ou phosphine qui forment un pont entre L et L' ; chaque X est indépendamment de l'hydrogène, un radical aryle, alkyle, alcényle, alkylaryle, ou arylalkyle ayant de 1-20 atomes de carbone, un radical hydrocarboxy ayant de 1-20 atomes de carbone, un halogène, R²CO₂₋, ou R²₂NCO₂, dans lesquels chaque R² est un groupe hydrocarbyle contenant de 1 à 20 atomes de carbone ; y équivaut à 0, 1 ou 2 ; x équivaut à 1, 2, 3 ou 4 en fonction de l'état de valence de M ; z est égal à 0 ou 1 et est égal à 0 quand y est égal à 0 ; et x-y > 1, les étapes du procédé comprenant la mise en réaction (a) du produit de réaction d'un composé comprenant au moins un groupe ligand cyclopentadiényle, indényle ou fluorényle avec un composé alkyle de métal alcalin avec (b) un sel de métal de transition en présence de (c) un accélérateur choisi parmi les éthers, les phosphines tertiaires, les amines tertiaires et la pyridine, éventuellement en présence de (d) un solvant, dans laquelle, lorsqu'un solvant n'est pas utilisé pendant la réaction de (a) et (b), la quantité d'accélérateur utilisée est inférieure à 70 pour cent en poids de la masse combinée du produit de réaction (a) et du sel de métal de transition (b) et dans laquelle, si un solvant est utilisé pendant la réaction (a) et (b), la quantité d'accélérateur utilisée est inférieure à 20 pour cent en poids de la masse combinée du produit de réaction (a), du sel de métal de transition (b) et du solvant.

12. Composé métallocène ayant la formule : (L)_{y}R¹_{z}(L')MX_{(x-y-1)} où M est un métal choisi dans les groupes IIIB à VIII ; L et L' sont identiques ou différents et sont des ligands cyclopentadiényle, indényle ou fluorényle à liaison π coordonnés à M, R¹ est choisi dans le groupe constitué de radicaux alkylène en C₁-C₄ substitués ou non substitués, de groupes diaryle ou dialkyle de silicium ou de germanium, et de radicaux aryl- ou alkyl- amine ou phosphine qui forment un pont entre L et L' ; chaque X est indépendamment de l'hydrogène, un radical aryle, alkyle, alcényle, alkylaryle, ou arylalkyle ayant 1-20 atomes de carbone, un radical hydrocarboxy ayant 1-20 atomes de carbone, un halogène, ou R²CO₂-, ou R²₂NCO₂₋, dans lesquels chaque R² est un groupe d'hydrocarbyle contenant de 1 à 20 atomes de carbone ; y équivaut à 0, 1 ou 2 ; x équivaut à 1, 2, 3 ou 4 en fonction de l'état de valence de M ; z équivaut à 0 ou 1 et équivaut à 0 quand y est égal à 0 ; et x-y ≥ 1, le métallocène ayant une solubilité, dans des conditions de reflux, dans du dichlorure de méthylène d'une quantité inférieure à 0,5 gramme par litre.
